Europäisches Patentamt

European Patent Office

Office européen des brevets

(11) Veröffentlichungsnummer: **0 298 213**

**A1**

## (12) EUROPÄISCHE PATENTANMELDUNG

(21) Anmeldenummer: 88107079.1

(22) Anmeldetag: 03.05.88

(51) Int. Cl.⁴: **G01M 17/00 , F16P 3/14**

(30) Priorität: 04.06.87 DE 8707968 U

(43) Veröffentlichungstag der Anmeldung:
**11.01.89 Patentblatt 89/02**

(84) Benannte Vertragsstaaten:
**AT BE CH ES FR GB GR IT LI LU NL SE**

(71) Anmelder: **Maschinenbau Haldenwang GmbH
& Co. KG
Hoyen 2
D-8961 Haldenwang(DE)**

(72) Erfinder: **Knestel Anton
Riedleweg 4
D-8961 Hopfenbach(DE)**

(74) Vertreter: **Patentanwälte Beetz sen. - Beetz
jun. Timpe - Siegfried - Schmitt-Fumian-
Mayr
Steinsdorfstrasse 10
D-8000 München 22(DE)**

(54) **Sicherungsvorrichtung für Rollenprüfstände mit Montagegruben.**

(57) Bei der Sicherungsvorrichtung ist zur Überwachung der Montagegrube (2) eine Detektorschaltung vorgesehen ist, die bei der Erfassung von Personen in der Montagegrube (2) den Rollenprüfstand (1) des-aktiviert. Die Sicherungsvorrichtung weist eine Detektorschaltung auf, die mindestens einen Bewegungsmelder (3) umfaßt und eine Sicherheitseinrichtung zur Selbstüberwachung, die auch ein Des-aktivieren des Rollenprüfstands bei einem Defekt der Detektorschaltung veranlaßt.

Fig. 1b

EP 0 298 213 A1

## Sicherungsvorrichtung für Rollenprüfstände mit Montagegruben

Die vorliegende Erfindung betrifft eine Sicherungsvorrichtung für Rollenprüfstände mit Montagegruben, insbesondere für Bremsprüfstände für Kraftfahrzeuge.

Auf einem Bremsprüfstand treiben Rollen jeweils zwei Fahrzeugräder an, wodurch bei den angetriebenen Rädern auch die Kardanwelle in eine Drehbewegung versetzt wird. Da sich das Einstellen von Bremsen bei laufendem Rollenprüfstand, d.h. bei sich drehenden Rädern eines Kraftfahrzeugs, als einfach und schnell erwiesen hat, sind Mechaniker gelegentlich dazu übergegangen, bei laufendem Rollenprüfstand unter das Kraftfahrzeug in die Montagegrube zu steigen, um die Einstellarbeiten dort vorzunehmen. Dabei ist es in mehreren Fällen zu tödlichen Unfällen gekommen, bei denen die in der Montagegrube arbeitenden Personen von der sich drehenden Kardanwelle erfaßt wurden.

Die Berufsgenossenschaft Eisen und Metall sah sich dadurch veranlaßt, schärfere Unfallverhütungsvorschriften für Rollenprüfstände zu erlassen, wonach es nicht erlaubt ist, in einer Montagegrube bei laufendem Prüfstand im Bereich der freiliegenden Kardanwelle zu arbeiten. Rollenprüfstände sollen so beschaffen sein, daß ein Mißachten dieser Unfallverhütungsvorschriften von vorneherein unmöglich ist. Dazu gehört, daß Rollenprüfstände mit Montagegruben mit Sicherheitsvorrichtungen ausgerüstet sind, die ein Betreten der Montagegrube und ein Arbeiten in der Montagegrube bei laufendem Rollenprüfstand unmöglich macht. Ferner müssen die Sicherheitsvorrichtungen so ausgelegt sein, daß sie einen Betrieb des Prüfstandes unmöglich machen, wenn die Sicherheitsvorrichtung defekt ist oder durch Manipulation an einer Detektoranordnung "überlistet" werden sollte.

Bereits bekannt sind Sicherheitsvorkehrungen, bei denen der Grubenboden im Gefahrenbereich, d.h. unterhalb der Kardanwelle von sich auf dem Prüfstand befindlichen Fahrzeugen mit Trittschaltermatten ausgelegt ist, bei deren Betreten die Stromzufuhr zum Rollenprüfstand unterbrochen wird. Ferner ist es bekannt, eine Montagegrube in Längsrichtung mit sich selbst sichernden Lichtschranken, die jeweils einen maximalen Abstand von 25 cm zueinander haben, zu durchstrahlen. Auch eine Querdurchstrahlung von Montagegruben mit selbstsichernden Lichtschranken mit einem maximalen Strahlabstand von 25 cm wurde bereits ins Auge gefaßt.

Alle diese bekannten Sicherheitsvorrichtungen weisen den Nachteil auf, daß sie mit relativ einfachen Mitteln manipulierbar sind, so daß weiterhin ein Arbeiten in der Montagegrube bei laufendem Rollenprüfstand möglich bleibt. So können z.B. die Trittmatten durch Einlegen von großen Platten bzw. Brettern außer Gefecht gesetzt werden, die sich z.B. auf den Treppenstufen, die in die Montagegrube führen, abstützen oder die den Auflagedruck, den eine auf den Platten stehende Person erzeugt, so großflächig verteilen, daß die Auslöseschwelle der Trittmatten dadurch unterschritten wird.

Bei den Vorrichtungen, die mit Lichtschranken arbeiten, unterscheidet man Anordnungen, in denen die Grube längs durchstrahlt wird und eine Querdurchstrahlung der Grube. Die erste Variante ist immer dann problematisch, wenn z.B. die Rollen in die Grube hineinragen. Die zweite Variante ist sehr teuer, da etwa alle 25 cm eine separate Lichtschranke installiert werden muß.

Der Erfindung liegt die Aufgabe zugrunde, eine Sicherheitsvorrichtung für Rollenprüfstände mit Montagegruben zu schaffen, die ein Arbeiten von Personen in der Montagegrube unmöglich macht, die nicht manipulierbar ist und die den Prüfstand auch dann in den sicheren Zustand übergehen läßt, d.h. abschaltet, wenn sich ein Defekt bei einem beliebigen Teil der Vorrichtung einstellt.

Diese Aufgabe wird anspruchsgemäß gelöst.

In den Unteransprüchen sind Merkmale besonders bevorzugter Ausführungsbeispiele gekennzeichnet.

Die erfindungsgemäße Sicherheitsvorrichtung weist einen oder mehre Bewegungsmelder auf, die für sich genommen als Sensorelemente von Einbruchssicherungsanlagen bekannt sind. Solche Bewegungsmelder erfassen einen Parameter des von ihnen erfaßten Umfeldes, im folgenden Gesichtsfeld genannt. Bei einem Infrarotbewegungsmelder ist dies z.B. eine Änderung in dem Strahlungspegel im Gesichtsfeld des Infrarotbewegungsmelders. Wesentlich ist hier, daß solche Systeme lediglich auf Pegeländerungen ansprechen, wobei sowohl der zeitliche Änderungsverlauf als auch der Absolutbetrag der Änderung, der zur Auslösung eines Meldesignals erforderlich ist, vorbestimmbar sind. Damit werden solche Systeme unabhängig von der konstanten Umgebungstemperatur, so daß nicht schon deshalb ein Signal ausgelöst wird, weil sich die Lufttemperatur um den Infrarotsensor herum im Laufe der Jahreszeiten um einige $10^{\circ}$ geändert hat.

Ein solcher Infrarotbewegungsmelder könnte z.B. dadurch blindgeschaltet werden, indem man ihn einfach mit wärmedämmendem Material abdeckt, so daß er gegenüber Temperaturänderungen in seinem ursprünglichen Gesichtsfeld nunmehr unempfindlich wird. Um eine solche Täuschung der Sicherheitsvorrichtung zu verhindern, sieht die Erfindung ferner eine Sicherheitskette innerhalb der Detektorschaltung der Sicherheitsvorrichtung zur Selbstüberwachung vor, die auch dann ein Desaktivieren des Rollenprüfstands veranlaßt, wenn ein Defekt der Detektorschaltung auftritt. Die Selbstüberwachung erfolgt erfindungsgemäß dadurch, daß beim Inbetriebnehmen des Rollenprüfstands für kurze Zeit ein Zustand simuliert wird, der dem Aufenthalt einer Person in der Montagegrube entspricht. Dieser Zustand muß von der Detektorschaltung als Testsignal einmal richtig erfaßt worden sein, bevor die Sicherheitsvorrichtung in den Normalbetrieb übergehen kann.

Zu diesem Zweck ist bei einer Ausführung der Erfindung, die mit einem Infrarotbewegungsmelder arbeitet, eine Heizplatte vorgesehen, die sich innerhalb der Grube im Gesichtsfeld des Bewegungsmelders befindet und die für eine kurze Zeit aufgeheizt werden kann, um die Körperwärme einer sich inder Montagegrube befindlichen Person zu simulieren. Ein Abdecken des Infrarotmeßfühlers, z.B. mit einem Filzhut, würde dazu führen, daß dieses erste Testsignal von Infrarotmeßfühlern nicht bzw. nicht mit der erforderlichen Intensität erfaßt wird, so daß die Detektorschaltung nicht in den normalen Betriebszustand übergeht und der Prüfstand von vornherein nicht aktivierbar ist.

Bei einer weiteren Ausführungsform der Erfindung weist der Bewegungsmelder einen kapazitiven Bewegungsfühler auf, wobei das Simulationssignal zur Selbstüberwachung der Detektorschaltung durch ein Kurzschließen der Kapazität erzeugt wird. Die weitere Selbstüberwachung erfolgt analog zu der oben erläuterten.

Die erfindungsgemäße Sicherungsvorrichtung hat gegenüber bekannten Sicherungsvorrichtungen den Vorteil, gegenüber Manipulationen vollkommen sicher und ferner sehr kostengünstig realisierbar zu sein. Sie kann dabei ohne größeren Aufwand in bereits bestehende Rollenprüfstände integriert werden. Ihre Montage erfordert dabei keine besonderen Spezialkenntnisse auf dem Gebiet der Sensortechnik, die über das Können eines durchschnittlichen Fachmanns hinausgehen.

Im folgenden wird die Erfindung anhand der Beschreibung von bevorzugten Ausführungsformen in Verbindung mit der Zeichnung näher erläutert. Die Beschreibung dieser Ausführungsbeispiele bedeutet keine Einschränkung der Erfindung auf die dargestellten Ausführungsformen. Es zeigen:

Fig. 1a

bzw. b eine erste Ausführungsform einer Sicherungsvorrichtung für einen Rollenprüfstand mit einem Infrarotbewegungsmelder im Querschnitt bzw. in Draufsicht;

Fig. 2a

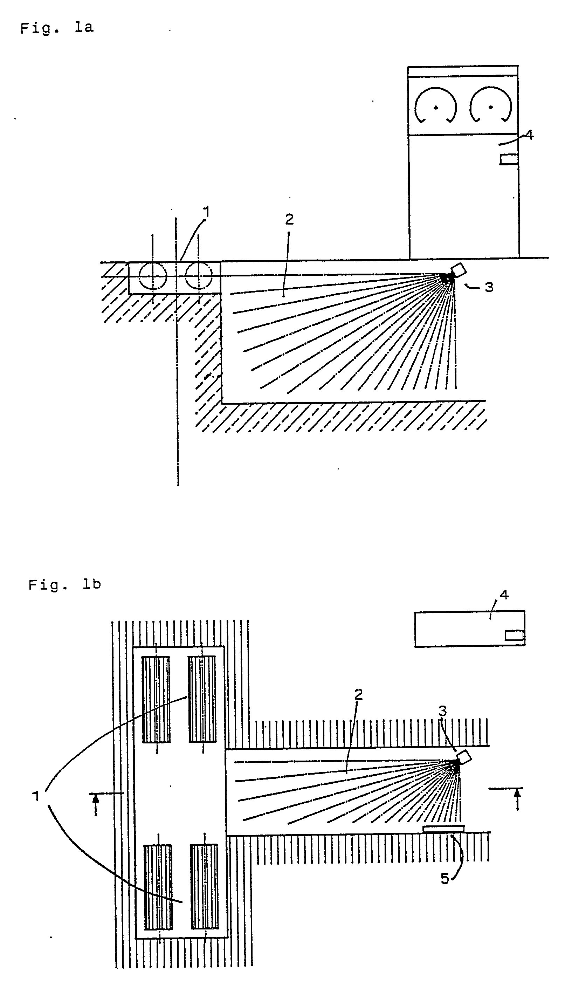

bzw. b eine Variante der in Fig. 1 gezeigen Ausführungsform mit zwei Infrarotbewegungsmeldern im Querschnitt bzw. in Draufsicht;

Fig. 3a

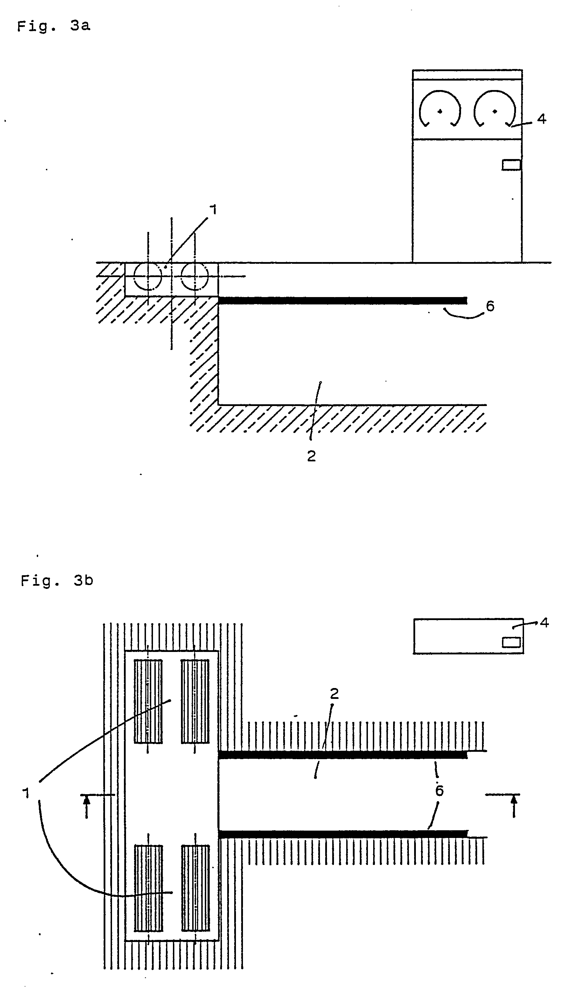

bzw. b eine zweite Ausführungsform einer Sicherheitsvorrichtung für Rollenprüfstände mit einem kapazitiven Bewegungsmelder im Querschnitt bzw. in Draufsicht; und

Fig. 4a

bzw. b eine Variante der in Fig. 3 gezeigten Ausführungsform für größere Montagegruben im Querschnitt bzw. in Draufsicht.

Fig. 1a zeigt im Querschnitt einen Rollenprüfstand mit den angetriebenen Rollen 1, einer Montagegrube 2, einem Infrarotbewegungsmelder 3 und einem Meßgeräteschrank 4. Fig. 1b zeigt dieselbe Prüfstandanordnung in Draufsicht. Für gleiche oder äquivalente Bauelemente werden im folgenden die gleichen Bezugszeichen verwendet. Man erkennt aus den Fig. 1a und 1b, daß der Bereich der Montagegrube, über dem gegebenenfalls die Kardanwelle eines Kraftfahrzeugs liegen kann, im Gesichtsfeld des Infrarotbewegungsmelders 3 liegt. so daß ein Eindringen einer Person innerhalb der Montagegrube in den in Fig. 1 mit Strich-punktierten Linien gezeichneten Bereich dort zu einer Änderung des räumlichen Temperaturprofils führt, was von dem Infrarotbewegungsmelder 3 erfaßt wird. Die Detektorschaltung, in der der Bewegungsmelder 3 integriert ist, löst dann automatisch ein Signal aus, mit dessen Hilfe der Rollenprüfstand desaktiviert wird. Das heißt, ein sich in Betrieb befindender Rollenprüfstand, dessen Rollen angetrieben sind, wird angehalten und ein stillstehender Rollenprüfstand kann nicht in Betrieb genommen werden. Die Detektorschaltung kann dabei nach Bedarf so ausgeführt sein, daß der Rollenprüfstand sofort wieder aktiviert wird, sobald die Person das Gesichtsfeld des Infrarotbewegungsdetektors verlassen hat. Es ist auch eine Variante denkbar, gemäß der der Rollenprüfstand beim Eindringen einer Person ins Gesichtsfeld des Infrarotbewegungsdetektors vollständig abgeschaltet wird und ein Wiedereinschalten nur manuell erfolgen kann. Diese und andere zweckmäßige schaltungstechnische Maßnahmen können je nach Bedarf getroffen werden. Um zu verhindern, daß der von dem Bewegungsmelder überwachte Bereich aus der Montagegrube herausragt, kann das Gesichtsfeld des Bewegungsmelders durch entsprechend angeordnete Blenden zweckmäßigerweise eingegrenzt werden.

Fig. 1b zeigt die Heizplatte 5, die einen Bestandteil der Sicherheitskette zur Selbstüberwachung der Detektorschaltung darstellt. Mit der Heizplatte 5 wird zu Beginn bei der Inbetriebnahme des Rollenprüfstandes, z.B. dadurch ausgelöst, daß ein Fahrzeug auf den Rollenprüfstand gefahren wird, ein Test der Detektorschaltung durchgeführt, mit dem die Funktionsfähigkeit der Schaltung überprüft wird. Die Heizplatte wird dabei für kurze Zeit, beispielsweise für eine Sekunde, etwa auf Körpertemperatur erhitzt. Damit empfängt der Infrarotmeßfühler Wärmestrahlen entsprechender Intensität und Wellenlänge, so daß dieser ein entsprechendes Meldesignal abgibt. Dieses Testsignal wird an eine Schalteranordnung angelegt, die z.B. einen selbsthaltenden Schalter betätigt, der den weiteren normalen Betrieb der Detektorschaltung gewährleistet. Wird bei diesem Test kein Meldesignal erzeugt, so geht die Detektorschaltung nicht in den normalen Zustand über und die Sicherungsvorrichtung läßt ein Aktivieren des Rollenprüfstandes nicht zu.

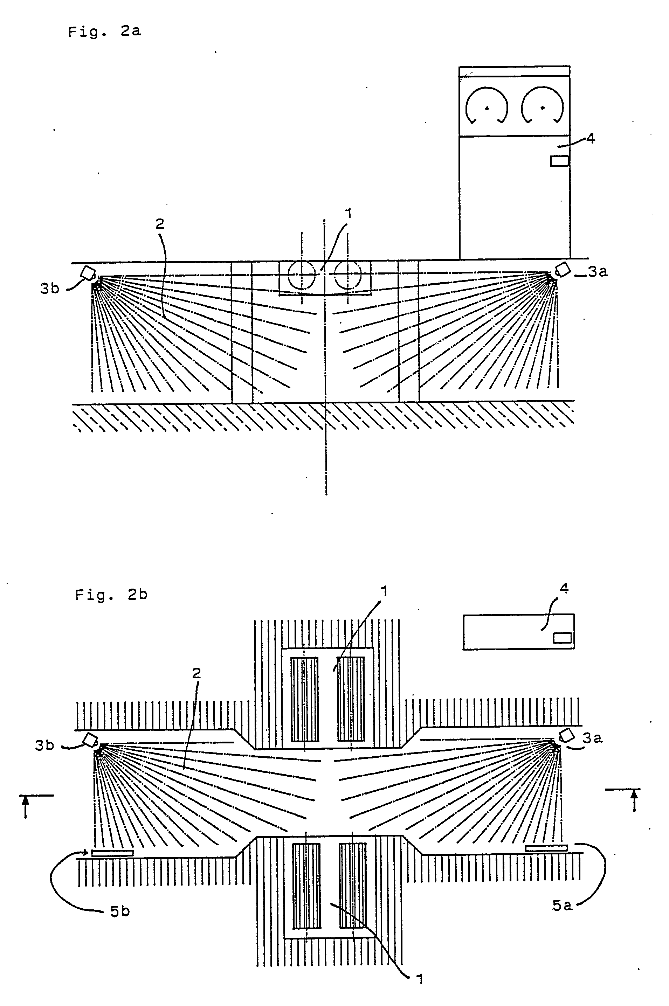

Die Fig. 2a und 2b zeigen einen Rollenprüfstand, bei dem die angetriebenen Rollen 1 sich etwa in der Quermittenebene einer längeren Montagegrube befinden. Die Draufsicht gemäß Fig. 2b zeigt, daß sich die Montagegrube auf der Höhe der Rollen etwas verjüngt, so daß der von den Infrarotbewegungsmeldern 3a und 3b abgedeckte Bereich der Montagegrube jeweils etwas eingeschränkt ist. Zusammen erfassen die Bewegungsmelder jedoch den gesamten Raum innerhalb der Montagegrube, so daß keine abgeschatteten Bereiche entstehen. Jedem Infrarotbewegungsmelder 3a bzw. 3b ist eine Heizplatte 5a bzw. 5b zugeordnet. Die Bewegungsmelder können parallel geschaltet sein oder unabhängig voneinander in getrennten Schaltungen angeordent sein, wodurch eine Redundanz der Schaltung erzielt wird, was deren Betriebssicherheit wiederum erhöht.

Die Fig. 3a bzw. 3b zeigen eine weitere Ausführungsform der erfindungsgemäßen Sicherungsvorrichtung, bei der ein kapazitiver Bewegungsmelder verwendet wird. in den Fig. 3a und 3b ist ein Metallstreifen 6 gezeigt, der parallel zur Oberkante der Montagegrube auf zwei sich gegenüberliegenden Längsseitenwänden der Montagegrube angebracht ist. Der Mitteilstreifen ist gegenüber den Grubenwänden isoliert und stellt ein Pol eines Kondensators dar, dessen anderer Pol auf Erdpotential liegt und durch die Grubenwände und den Grubenboden gebildet wird. Wenn sich eine Person in der Montagegrube bewegt, ändert sich dadurch die Kapazität der Kondensatoranordnung aufgrund der Änderung der die Elektrizitätskonstante R des sich zwischen den Kondensatorpolen befindlichen Mediums. Die Detektorschaltung, in die der kapazitive Bewegungsmelder integriert ist, kann beispielsweise einen LC-Schwingkreis umfassen, wobei als Meldesignal eine Frequenzverschiebung oder ein Signalabfall aufgrund der Verstimmung eines Resonanzkreises verwendet werden können.

Ein Testsignal wird bei der kapazitiven Anordnung dadurch erzielt, indem für eine kurze Zeit die beiden Pole der Kondensatoranordnung kurzgeschlossen werden. In dem in Fig. 3 gezeigten Ausführungsbeispiel erfolgt dies z.B. dadurch, daß der Mitteilstreifen 6 über einen Schalter zeitweilig geerdet wird.

Die Funktionsweise und die mögliche Verschaltung der auch bei dieser Ausführungsform notwendigen Sicherheitskette zur Selbstüberwachung der Detektorschaltung ist mit der nach dem ersten Ausführungsbeispiel identisch.

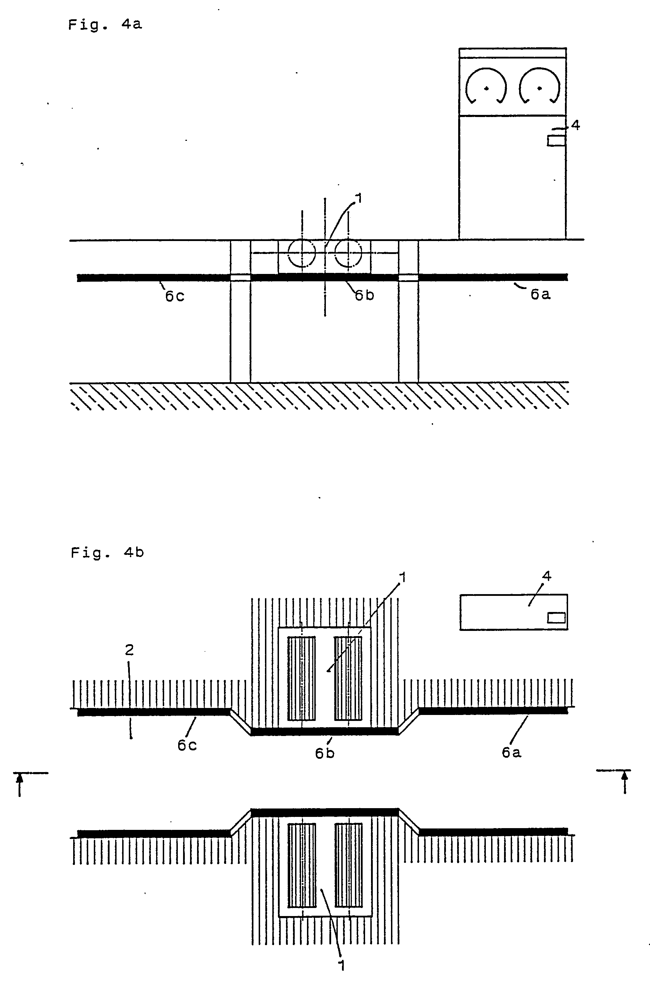

Fig. 4a bzw. 4b zeigt eine Variante der zweiten Ausführungsform der Erfindung im Querschnitt bzw. in Draufsicht, wobei analog wie bei der in Fig. 2 gezeigten Variante der Rollenprüfstand sich in der Quermittelebene einer langen Montagegrube befindet. Dabei ist die Montagegrube auf der Höhe des Rollenprüfstands in ihrer Breite wiederum etwas schmaler. Die zueinander parallelen Abschnitte der Längsseitenwände der Montagegrube sind auch bei dieser Ausführungsvariante wiederum mit etwa 10 cm breiten Metallbändern beplankt, die untereinander elektrisch verbunden sind und parallel zur Oberkante der Montagegrube etwa an der Unterkante des Rollenprüfstands entlang verlaufen. Man erkennt, daß auch bei einer etwas unregelmäßigen Geometrie das gesamte Montagegrubenvolumen sicher durch den Kapazitätsbewegungsmelder erfaßt wird.

Man erkennt ferner, daß diese Ausführungsform besonders platzsparend angebracht werden kann und die Bewegungsfreiheit innerhalb der Montagegrube nicht einengt.

Die vorteilhaften Eigenschaften der erfindungsgemäßen Sicherungsvorrichtung beruhen auf der Kombination einer mindestens einen Bewegungsmelder umfassenden Detektorschaltung mit einer Sicherheitskette zur Selbstüberwachung, wobei der Fachmann erkennt, daß sich diese erfindungsgemäße prinzipielle Schaltungsanordnung je nach Bedarfszweck in einer Vielzahl verschiedener Varianten realisieren läßt. Die Erfindung beschränkt sich jedoch nicht auf die oben erläuterten Ausführungsbeispiele, sondern umfaßt vielmehr alle Varianten, die unter den Inhalt der Ansprüche fallen.

## Ansprüche

1. Sicherungsvorrichtung für Rollenprüfstände mit Montagegruben, bei der zur Überwachung der Montagegrube eine Detektorschaltung vorgesehen ist, die bei der Erfassung von Personen in der Montagegrube den Rollenprüfstand des-aktiviert, dadurch gekennzeichnet, daß die Detektorschaltung mindestens einen Bewegungsmelder (3, 3a, 3b; 6, 6a, 6b, 6c) und eine Sicherheitskette zur Selbstüberwachung, die auch ein Des-aktivieren des Rollenprüfstands bei einem Defekt der Detektorschaltung veranlaßt, aufweist.

2. Sicherheitsvorrichtung nach Anspruch 1, dadurch gekennzeichnet, daß der Bewegungsmelder ein Infrarot-Bewegungsmelder (3, 3a, 3b) ist.

3. Sicherheitsvorrichtung nach Anspruch 1, dadurch gekennzeichnet, daß der Bewegungsmelder ein kapazitiver Bewegungsmelder (6; 6a, 6b, 6c) ist.

4. Sicherheitsvorrichtung nach einem der Ansprüche 1-3, dadurch gekennzeichnet, daß die Sicherheitskette eine Schalteranordnung aufweist, die eine Aktivierung des Rollenprüfstandes nur dann zuläßt, wenn das Funktionieren der bzw. des Bewegungsmelder(s) durch zeitweise Simulation der Erfassung von Personen in der Montagegrube (2) bestätigt ist.

5. Sicherheitsvorrichtung nach den Ansprüchen 2 und 4, dadurch gekennzeichnet, daß die Sicherheitskette eine im Gesichtsfeld des Infrarot-Bewegungsmelders (3; 3a, 3b) angeordnete kurzzeitig aufheizbare Heizplatte (5) zur Erzeugung eines Testsignals aufweist.

6. Sicherheitsvorrichtung nach den Ansprüchen 3 und 4, dadurch gekennzeichnet, daß die Sicherheitskette einen Schalter zum kurzzeitigen Kurzschließen der Kondensatoranordnung (6; 6a, 6b, 6c) des kapazitiven Bewegungsmelders aufweist.

7. Sicherheitsvorrichtung nach einem der Ansprüche 1, 2, 4 und 5, dadurch gekennzeichnet, daß der bzw. die Infrarot-Bewegungsmelder (3; 3a, 3b) derart in je einer Raumecke innerhalb der Montagegrube (2) angeordnet ist bzw. sind, daß die gesamte Grube vom Gesichtsfeld des bzw. der Bewegungsmelder erfaßt ist und die Heizplatte (5) bzw. -platten (5a, 5b) an einer Seitenwand der Grube (2) angeordnet ist bzw. sind.

8. Sicherheitsvorrichtung nach einem der Ansprüche 1, 3, 4 und 6, dadurch gekennzeichnet, daß der kapazitive Bewegungsmelder ein Metallband (6) oder mehrere -bänder (6a, 6b, 6c) aufweist, mit dem bzw. denen die Grubenwände beplankt ist bzw. sind und das bzw. die einen gegenüber der Grubenwand isolierten Pol eines Kondensators darstellen, dessen anderer Pol durch Grubenwandungen und Boden gebildet werden.

9. Sicherheitsvorrichtung nach Anspruch 3, dadurch gekennzeichnet, daß der kapazitive Bewegungsmelder einen LC-Schwingkreis aufweist, dessen dynamische Verstimmung um einen vorgegebenen Wert ein Meldesignal auslöst.

10. Sicherheitsvorrichtung nach einem der Ansprüche 1-9, dadurch gekennzeichnet, daß die Detektorschaltung und die Sicherheitskette durch einen Schalter in Betrieb gesetzt werden, der durch ein auf den Rollenprüfstand fahrendes Fahrzeug betätigt wird.

Fig. 1a

Fig. 1b

Fig. 2a

Fig. 2b

Fig. 3a

Fig. 3b

Fig. 4a

Fig. 4b

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | DE-A-3 601 251 (ROBERT BOSCH) <br> * Figur 1; Anspruch 1 * <br> --- | 1,2 | G 01 M 17/00 <br> F 16 P 3/14 |
| P,Y | DE-U-8 704 239 (KFZ-WERKSTATT-TECHNIK) <br> * Anspruch 1 * <br> --- | 1,2 | |
| Y | ELEKTROTECHNIK <br> Band 67, Nr. 7, 10. April 1985, Seiten 18-24; DR. P. SCHREIBER: "Sicherheit per Infrarot"_* Zusammenfassung * | 1,2 | |
| A | IDEM <br> * Seite 22, Spalte 3 * <br> --- | 4 | |
| A | DE-A-2 254 024 (EURO CEDAG) <br> * Figur 1; Seite 1, Zeilen 1-6 * <br> --- | 3 | |
| A | DE-A-3 205 394 (G. HAAG) <br> * Figur 1; Anspruch 1 * <br> --- | | |
| A | FR-A-2 478 514 (AEG-ELOTHERM) <br> * Figur 1 * <br> ----- | | **RECHERCHIERTE SACHGEBIETE (Int. Cl.4)** <br><br> G 01 M 17/00 <br> F 16 P 3/14 <br> G 08 B 21/00 |

Der vorliegende Recherchenbericht wurde für alle Patentansprüche erstellt

| Recherchenort | Abschlußdatum der Recherche | Prüfer |
|---|---|---|
| BERLIN | 09-09-1988 | BREUSING J |